# EUROPÄISCHE PATENTANMELDUNG

(11) **EP 2 338 729 A1**
(43) Veröffentlichungstag der Anmeldung: **29.06.2011**
(21) Anmeldenummer: 10193546.8
(22) Anmeldetag: 02.12.2010
(51) Int. Cl.: B60Q 1/08, F21S 8/12

(54) **Lichtmodul für einen Kraftfahrzeugscheinwerfer**

(30) Priorität: 22.12.2009 DE 202009017648 U; 27.04.2010 DE 202010006097 U
(71) Anmelder: Automotive Lighting Reutlingen GmbH, 72762 Reutlingen (DE)
(72) Erfinder: Vogt, Henning, 70567 Stuttgart (DE); Buchberger, Christian, 72770 Reutlingen (DE); Rosenhahn, Ernst-Olaf, 72411 Bodelshausen (DE)
(74) Vertreter: Dreiss

(57) **Zusammenfassung**

Die Erfindung betrifft ein Lichtmodul (23) für einen Kraftfahrzeugscheinwerfer (2, 3), zur Erzeugung einer Lichtverteilung, das Lichtmodul (23) umfassend:
- mehrere separat ansteuerbare Leuchtdioden (18) zum Aussenden von elektromagnetischer Strahlung, und
- mindestens eine Abbildungsoptik (19), vorzugsweise in Form einer Linse, zur Abbildung der von den Leuchtdioden (18) ausgesandten Strahlung auf einer Fahrbahn vor dem Fahrzeug (1). Um das Lichtmodul dahingehend auszugestalten, dass es ein Markierungslicht erzeugt und einfach und kostengünstig hergestellt werden kann, wird vorgeschlagen, dass das Lichtmodul (23) zur Erzeugung eines Markierungslichts (10) ausgebildet ist, das zur gezielten und räumlich beschränkten zusätzlichen Ausleuchtung eines vor dem Fahrzeug (1) detektierten Objekts dient und auf einem in einem Abstand vor dem Scheinwerfer (2, 3) angeordneten Messschirm einen ausgeleuchteten Markierungsbereich umfasst, der in horizontaler und vertikaler Richtung eine Erstreckung von jeweils lediglich einigen Winkelgrad aufweist. (Figur 5)

## Beschreibung

Die vorliegende Erfindung betrifft ein Lichtmodul für einen Kraftfahrzeugscheinwerfer. Das Lichtmodul dient zur Erzeugung einer Lichtverteilung und umfasst:
- mehrere separat ansteuerbare Leuchtdioden zum Aussenden von elektromagnetsicher Strahlung, und
- mindestens eine Abbildungsoptik, vorzugsweise in Form einer Projektionslinse, zur Abbildung der von den Leuchtdioden ausgesandten Strahlung auf einer Fahrbahn vor dem Fahrzeug.

Die Erfindung betrifft außerdem eine Scheinwerferanordnung für ein Kraftfahrzeug, die einen ersten Scheinwerfer für einen Rechtsanbau an dem Kraftfahrzeug und einen zweiten Scheinwerfer für einen Linksanbau an dem Kraftfahrzeug aufweist, wobei jeder der Scheinwerfer mindestens ein Lichtmodul zur Erzeugung einer Lichtverteilung aufweist.

Scheinwerfer mit Lichtmodulen und Scheinwerferanordnungen für Kraftfahrzeuge der eingangs genannten Art sind in unterschiedlichen Ausführungsformen aus dem Stand der Technik bekannt. So beschreibt beispielsweise die Offenlegungsschrift DE 10 2004 055 882 A1 einen Kraftfahrzeugscheinwerfer mit einem ersten Lichtmodul zur Erzeugung einer Abblendlichtverteilung sowie einem zweiten Lichtmodul umfassend mehrere nebeneinander angeordnete Leuchtdioden zur Erzeugung einer Kurvenlichtverteilung. Die Leuchtdioden werden in Abhängigkeit von einem Lenkwinkel angesteuert, so dass mit zunehmendem Lenkwinkel die Leuchtdioden nach und nach aktiviert werden, bis schließlich in engen Kurven alle Leuchtdioden Licht aussenden, um die Kurve auszuleuchten. Der aus dieser Druckschrift bekannte Scheinwerfer erzeugt also ein dynamisches Kurvenlicht mittels mehrerer unterschiedlich ausgerichteter statischer Leuchtdioden, also ohne bewegte Teile.

Des Weiteren beschreibt eine zum Zeitpunkt der Anmeldung der vorliegenden Patentanmeldung noch nicht offengelegte Patentanmeldung DE 10 2009 035 743 ein Lichtmodul für einen Kraftfahrzeugscheinwerfer zur Erzeugung einer adaptiven Lichtverteilung. Das Lichtmodul erzeugt eine Lichtverteilung mit einer zumindest teilweisen horizontalen Helldunkelgrenze. Zur Realisierung einer dynamischen Kurvenlichtfunktion kann das Lichtmodul in Abhängigkeit von einem Lenkwinkel in horizontaler Richtung verschwenkt werden. Eine Blendenanordnung des Lichtmoduls, die zur Erzeugung der Helldunkelgrenze der abgeblendeten Lichtverteilung dient, weist eine Einkerbung auf, die auf einem in einem Abstand vor dem Scheinwerfer angeordneten Messschirm einen schmalen ausgeleuchteten Markierungsbereich oberhalb der Helldunkelgrenze erzeugt. Der Markierungsbereich dient zur Realisierung eines Markierungslichts, eines sogenannten Marker Light. Das aus dieser Druckschrift bekannte Lichtmodul erzeugt sowohl eine Abblendlichtverteilung mit dynamischer Kurvenlichtfunktion als auch ein Markierungslicht.

Bei dem aus der DE 10 2004 055 882 A1 bekannten Scheinwerfer erzeugt das Lichtmodul mit den Leuchtdioden lediglich ein dynamisches Kurvenlicht. Das in der DE 10 2009 035 743 beschriebene Lichtmodul erzeugt ein Markierungslicht lediglich in Verbindung mit anderen Leuchtfunktionen und ist deshalb relativ großbauend. Zudem muss das Lichtmodul zur Variation der Position des Markierungslichts mechanisch verstellt werden. Auf Grund des relativ hohen Gewichts des Lichtmoduls kann die Bewegung des Lichtmoduls nur relativ langsam oder mit einem relativ hohen Energieaufwand erfolgen. Außerdem führt die mechanische Verstellung des Lichtmoduls zu einer mechanischen Beanspruchung und einem Verschleiß der bewegbaren Teile des Moduls. Schließlich hat das bekannte Lichtmodul zur Erzeugung des Markierungslichts nur eine beschränkte Variabilität, da es nicht in verschiedenen Scheinwerfern eingesetzt werden kann. Für verschiedene Scheinwerfer muss das gesamte Lichtmodul neu ausgelegt werden.

Ausgehend von dem beschriebenen Stand der Technik liegt der vorliegenden Erfindung somit die Aufgabe zu Grunde, ein Lichtmodul für einen Kraftfahrzeugscheinwerfer dahingehend auszugestalten und weiter zu bilden, dass es ein Markierungslicht erzeugt und einfach und kostengünstig hergestellt werden kann. Außerdem sollte das Lichtmodul schnell beziehungsweise mit möglichst geringem Energieaufwand verstellt werden können und die mechanische Beanspruchung des Lichtmoduls durch Verstellen des ausgeleuchteten Markierungsbereichs möglichst gering sein.

Zur Lösung dieser Aufgabe schlägt die vorliegende Erfindung ausgehend von dem Lichtmodul der eingangs genannten Art vor, dass das Lichtmodul vorzugsweise ausschließlich zur Erzeugung eines Markierungslichts ausgebildet ist, das zur gezielten und räumlich beschränkten zusätzlichen Ausleuchtung eines vor dem Fahrzeug detektierten Objekts dient und auf einem in einem Abstand vor dem Scheinwerfer angeordneten Messschirm einen ausgeleuchteten Markierungsbereich erzeugt, der in horizontaler und vertikaler Richtung eine Erstreckung von jeweils lediglich einigen Winkelgrad aufweist.

Gemäß der vorliegenden Erfindung wird das Markierungslicht also von einem separaten Lichtmodul erzeugt. Vorzugsweise erzeugt das Lichtmodul außer dem Markierungslicht also keine anderen Lichtverteilungen. Mit dem Markierungslicht sollen gezielt Objekte im Erfassungsbereich eines Sensors des Kraftfahrzeugs, insbesondere am Fahrbahnrand oder auf der Fahrbahn vor dem Fahrzeug, zusätzlich beleuchtet werden, um diese hervorzuheben und den Fahrer des Kraftfahrzeugs auf eine eventuelle Gefahrensituation aufmerksam zu machen. Das bedeutet, dass zusätzlich zum Markierungslicht die Fahrbahn vor dem Fahrzeug zumindest durch eine andere Lichtverteilung, vorzugsweise durch eine abgeblendete Lichtverteilung, ausgeleuchtet wird. Diese zusätzliche Lichtverteilung wird von einem anderen Lichtmodul des Scheinwerfers erzeugt. Das Markierungslicht ist vorzugsweise größtenteils oberhalb einer horizontalen Helldunkelgrenze der zusätzlichen abgeblendeten Lichtverteilung angeordnet und kann dort in horizontaler Richtung bewegt werden. Die Tatsache, dass gemäß der vorliegenden Erfindung das Lichtmodul ausschließlich ein Markierungslicht erzeugt, bietet die Möglichkeit, dass das Lichtmodul zur Erzeugung des Markierungslichts optimiert wird. Insbesondere kann das erfindungsgemäße Lichtmodul zur Erzeugung eines Markierungslichts besonders kleinbauend und leicht ausgebildet werden, so dass bei einer mechanischen Verstellung des Lichtmoduls zur Variation der Position des ausgeleuchteten Markierungsbereichs relativ geringe Kräfte wirken. Eine mechanische Verstellung kann also schnell beziehungsweise mit geringem Energieaufwand erfolgen. In besonders bevorzugter Weise wird jedoch eine Verstellung der Position des Markierungslichts nicht mechanisch, sondern rein elektrisch ohne bewegliche Teile realisiert.

In dem Kraftfahrzeugscheinwerfer beziehungsweise in dessen Gehäuse können neben dem erfindungsgemäßen Lichtmodul zur Erzeugung des Markerlichts noch weitere Lichtmodule zur Erzeugung anderer Lichtfunktionen, beispielsweise Abblendlicht, Fernlicht, statisches oder dynamisches Kurvenlicht, Nebellicht, Positionslicht, Tagfahrlicht oder Blinklicht, vorgesehen sein. Es ist aber auch denkbar, dass das Lichtmodul zur Erzeugung des Markerlichts räumlich getrennt von dem Kraftfahrzeugscheinwerfer, also außerhalb des Scheinwerfergehäuses, an anderer Stelle im Frontbereich des Kraftfahrzeugs angeordnet ist. Auf Grund der geringen Größe des erfindungsgemäßen Lichtmoduls kann es an nahezu beliebiger Stelle im Frontbereich des Kraftfahrzeugs angeordnet werden. Dies gilt insbesondere dann, wenn die Position des ausgeleuchteten Markierungsbereichs in horizontaler Richtung nicht mechanisch, sondern elektrisch, also ohne mechanisch bewegte Teile verstellen zu müssen, variiert wird. In diesem Fall können mit dem Lichtmodul zur Erzeugung des Markierungslichts gezielt, ohne dass dabei mechanische Blenden oder andere Bauteile des Lichtmoduls bewegt werden müssen, Objekte vor dem Kraftfahrzeug, beispielsweise am Fahrbahnrand, angeleuchtet werden.

Zur Realisierung des erfindungsgemäßen Lichtmoduls kommt vorzugsweise ein LED-Array mit mehreren Leuchtdioden (sogenannte LEDs) zum Einsatz. Eine oder mehrere LEDs können auf einem gemeinsamen Träger angeordnet sein. Die LEDs können beispielsweise in horizontaler Richtung linear nebeneinander angeordnet sein. Die LEDs sind dabei einzeln ansteuerbar. So kann durch Aktivieren verschiedener LEDs die horizontale Position des Markierungslichts auf der Fahrbahn vor dem Fahrzeug oder auf einem vor dem Scheinwerfer angeordneten Messschirm variiert werden.

Die LEDs können für die Menschen sichtbares Licht aussenden, das den Fahrer des Kraftfahrzeugs auf eine mögliche Gefahrensituation vor dem Kraftfahrzeug durch Anleuchten eines detektierten Objekts mit sichtbarem Licht aufmerksam macht. Die Aufmerksamkeit des Fahrers kann noch dadurch verstärkt werden, dass das auf das detektierte Objekt gerichtete Markierungslicht blinkt (zum Beispiel wechselndes Ein- und Ausschalten beziehungsweise Erhöhen und Verringern der Leuchtstärke beziehungsweise der Helligkeit (sog. Dimmen)) oder das Licht in einer bestimmten, vorzugsweise von der Lichtfarbe der übrigen, von anderen Lichtmodulen erzeugten Lichtverteilung zumindest zeitweise abweichenden Farbe leuchtet. Als Farben sind alle im ECE-Farbraum zulässigen Farben denkbar, bspw. von bläulich weiß bis gelblich weiß.

Alternativ ist es denkbar, dass das Markierungslicht in einem für das menschliche Auge unsichtbaren Wellenlängenbereich operiert und somit eine Ausleuchtung vor dem Fahrzeug zum Beispiel in einem infraroten Spektralbereich in dem ausgeleuchteten Markierungsbereich gezielt verstärkt wird. Dies kann beispielsweise für eine automatische, rechnergestützte Auswertung sinnvoll sein, um in Grenzsituationen höhere Strahlungsintensitäten bereitzustellen, die auf möglicherweise gefährdende oder gefährdete Objekte räumlich beschränkt sind. Es ist also nicht erforderlich, dafür permanent und in dem gesamten Bereich vor dem Fahrzeug diese hohe Intensität zur Verfügung zu stellen. Insbesondere ist eine kurzzeitige, räumlich stark begrenzte Anhebung der Strahlungsintensität für die angestrahlten Verkehrsteilnehmer (Objekte) nicht gesundheitsschädigend.

Es ist denkbar, dass jeder der Leuchtdioden eine separate Optik zur Bündelung der von der Leuchtdiode ausgesandten Strahlung zugeordnet ist, wobei die Abbildungsoptik die von den Bündelungsoptiken gebündelte Strahlung auf der Fahrbahn vor dem Fahrzeug als Markierungslicht abbildet. Die Bündelungsoptiken sind an der Formung der Strahlungsbeziehungsweise Lichtverteilung des erfindungsgemäßen Lichtmoduls beteiligt. Vorzugsweise sind die Bündelungsoptiken in unmittelbarer Nähe zu den Leuchtdioden angeordnet. In diesem Fall werden die Bündelungsoptiken auch als Vorsatzoptiken bezeichnet, wobei vorzugsweise jeder der Leuchtdioden eine eigene Vorsatzoptik zugeordnet ist. Die Bündelungsoptiken können als ein Reflektor oder eine sogenannte Transmissionsoptik (Vorsatzoptik mit totalreflektierenden Eigenschaften mit Lichteinkoppelflächen für das von der LED ausgesandte Licht und Lichtauskoppelflächen für das gebündelte Licht) ausgebildet sein, wobei die Bündelungsoptik einteilig oder mehrteilig ausgeführt werden kann oder sogar eine Kombination aus Transmissions- und Reflexionseigenschaften aufweisen kann. Es ist sogar eine Formung beziehungsweise Vorformung der von den einzelnen Leuchtdioden ausgesandten und - falls vorhanden - von den Bündelungsoptiken gebündelten Lichtbündel durch ein Lichtleitelement denkbar.

Vorteilhafterweise sind die Leuchtdioden in einer im wesentlichen horizontalen Mittelebene des Lichtmoduls nebeneinander angeordnet. Die Mittelebene umfasst vorzugsweise die optische Achse des Lichtmoduls. Die Abbildungsoptik, die vorzugsweise als eine Projektionslinse ausgebildet ist, bildet diese LED-Reihe oder das durch die Bündelungsoptiken erzeugte Bild in einer Weise ab, dass jeweils eine oder mehrere der LEDs im Rahmen der Erzeugung des Markierungslichts einen horizontalen Winkelbereich von weniger als 5°, insbesondere etwa 1°, und einen vertikalen Winkelbereich von weniger als 20°, insbesondere etwa 4°, abdeckt. Die Leuchtdioden sind entweder genau auf oder etwas versetzt zur, insbesondere oberhalb der horizontalen Mittelebene des Lichtmoduls nebeneinander angeordnet.

Des Weiteren sind die einzelnen LEDs vorzugsweise in einer vertikalen Ebene, die senkrecht zur horizontalen Mittelebene und zur optischen Achse des Lichtmoduls verläuft, in horizontaler Richtung nebeneinander angeordnet. Eine relativ zur vertikalen Ebene gekrümmte beziehungsweise nicht ebene Anordnung der einzelnen LEDs ist ebenfalls denkbar, um die Abbildungseigenschaften des optischen Systems, insbesondere der Abbildungsoptik aber auch der Bündelungsoptiken, optimal auszunutzen.

Vorzugsweise sind jeweils mehrere Leuchtdioden einer gemeinsamen Abbildungsoptik zugeordnet. Besonders bevorzugt ist es, wenn sich alle Leuchtdioden des erfindungsgemäßen Lichtmoduls eine einzige gemeinsame Abbildungsoptik teilen. Die Leuchtdioden beziehungsweise die LEDs können einzeln angesteuert werden, das heißt die Leuchtdioden können einzeln ein- beziehungsweise ausgeschaltet, sowie deren Helligkeit hoch- beziehungsweise runtergedimmt werden. Durch das Ansteuern unterschiedlicher Leuchtdioden des Lichtmoduls kann der ausgeleuchtete Markierungsbereich vor dem Fahrzeug beziehungsweise auf einem vor dem Scheinwerfer angeordneten Messschirm ohne mechanisch bewegte Teile variiert werden. Wenn die Leuchtdioden in einer im wesentlichen horizontalen Reihe nebeneinander angeordnet sind, kann durch eine Ansteuerung der Leuchtdioden die Position des ausgeleuchteten Markierungsbereichs in horizontaler Richtung variiert werden.

Zur Realisierung einer besonders kompakten Ausführungsform des erfindungsgemäßen Lichtmoduls, weist das Lichtmodul eine Spiegelfläche auf, die sich auf der im wesentlichen horizontalen Mittelebene erstreckt. Die Spiegelfläche teilt also das erfindungsgemäße Lichtmodul entlang der horizontalen Mittelebene oder einer dazu im wesentlichen parallel verlaufenden Ebene in zwei Teile, wobei der eine Teil oberhalb der Spiegelebene und der andere Teil unterhalb der Spiegelebene angeordnet ist. Es ist denkbar, das Lichtmodul lediglich durch einen der beiden Teile des Lichtmoduls, beispielsweise den oberhalb der Spiegelebene angeordneten Teil, zu realisieren. In diesem Fall kann die Höhe der Abbildungsoptik in etwa halbiert werden. Die Leuchtdioden sind etwas oberhalb der Spiegelebene angeordnet. Eine durch die kompakte Bauweise des Lichtmoduls eventuell verursachte geringere vertikale Erstreckung des ausgeleuchteten Markierungsbereichs könnte durch eine entsprechende Ausgestaltung der Abbildungsoptik und/oder der Bündelungsoptiken oder durch andere geeignete Maßnahmen zumindest teilweise kompensiert werden.

Des Weiteren ist es denkbar, dass ein Mittelpunkt der horizontal nebeneinander angeordneten Leuchtdioden in einem Abstand zu einer im wesentlichen vertikalen Mittelebene des Lichtmoduls angeordnet ist. Die vertikale Mittelebene erstreckt sich entlang der optischen Achse des Lichtmoduls oder parallel dazu. Das heißt, dass die in Reihe nebeneinander angeordneten Leuchtdioden zu einer Seite der vertikalen Mittelebene hin versetzt, also asymmetrisch, angeordnet sind. Dadurch könnte der Tatsache Rechnung getragen werden, dass die meisten gefährdenden bzw. gefährdeten Objekte auf der eigenen Verkehrsseite detektiert werden. Die LEDs könnten so versetzt werden, dass das Markierungslicht insbesondere auf der eigenen Verkehrsseite horizontal verstellt werden kann und auf eine vollständige Abdeckung der Gegenverkehrsseite mit dem Markierungslicht bewusst verzichtet wird.

Durch diese asymmetrische Anordnung der Leuchtdioden in dem Lichtmodul ist es außerdem möglich, eine
Scheinwerferanordnung für Kraftfahrzeuge zu realisieren, die einen ersten Scheinwerfer für einen Rechtsanbau an dem Kraftfahrzeug und einen zweiten Scheinwerfer für einen Linksanbau aufweist, wobei jeder der Scheinwerfer ein Lichtmodul zur Erzeugung einer adaptiven Lichtverteilung aufweist. In einer solchen erfindungsgemäßen Scheinwerferanordnung wäre es denkbar, dass der Mittelpunkt der horizontal nebeneinander angeordneten Leuchtdioden des Lichtmoduls des einen Scheinwerfers auf einer anderen Seite der im wesentlichen vertikalen Mittelebene des Lichtmoduls angeordnet ist als der Mittelpunkt der horizontal nebeneinander angeordneten Leuchtdioden des Lichtmoduls des anderen Scheinwerfers. Bei einer solchen Ausgestaltung der Scheinwerferanordnung könnte bei reduzierter Anzahl der nebeneinander angeordneten LEDs bzw. LED-Chips der ausgeleuchtete Markierungsbereich über einen besonders großen Bereich in horizontaler Richtung verschwenkt werden.

Außerdem könnte durch Aktivierung aller Leuchtdioden der Lichtmodule der beiden Scheinwerfer der
Scheinwerferanordnung ein Zusatzfernlicht mit einer relativ großen resultierenden horizontalen Breite realisiert werden. Wenn man gemäß einer bevorzugten Ausführungsform der Erfindung davon ausgeht, dass die von einer der Leuchtdioden ausgesandte Strahlung nach der Abbildung durch die Abbildungsoptik einen Markierungsbereich mit einem horizontalen Winkelbereich von etwa 1° und einem vertikalen Winkelbereich von etwa 4° abdeckt, und man ferner beispielhaft davon ausgeht, dass jedes Lichtmodul zehn horizontal nebeneinander angeordnete Leuchtdioden umfasst, könnte mit der erfindungsgemäßen Scheinwerferanordnung mit den asymmetrisch angeordneten Leuchtdioden ein Zusatzfernlicht mit einer maximalen Breite von etwa 20° in horizontaler Richtung erzeugt werden. Bei entsprechend geänderter Auslegung wäre sogar die Erzeugung von Tagfahrlicht möglich, das vorzugsweise die ECE-R. 87 erfüllt.

Weitere Merkmale und Vorteile der vorliegenden Erfindung werden nachfolgend anhand der Figuren näher erläutert. Dabei haben die einzelnen in den Figuren gezeigten und nachfolgend beschriebenen Merkmale die angegebenen Eigenschaften und Vorteile auch ohne die übrigen Bauteile und Merkmale des beschriebenen Ausführungsbeispiels. Funktionsäquivalente Bauteile werden mit den gleichen Bezugszeichen bezeichnet. Es zeigen:
- Figur 1: ein Kraftfahrzeug mit einer erfindungsgemäßen Scheinwerferanordnung gemäß einer bevorzugten Ausführungsform;
- Figur 2: einen Kraftfahrzeugscheinwerfer der Scheinwerferanordnung aus Figur 1;
- Figur 3: eine schematische Darstellung eines mit einem erfindungsgemäßen Lichtmodul realisierbaren Markierungslichts gemäß einer bevorzugten Ausführungsform;
- Figur 4: einen prinzipiellen Aufbau eines auf Direktabbildung basierenden erfindungsgemäßen Lichtmoduls gemäß einer bevorzugten Ausführungsform;
- Figur 5: eine aus einer der Leuchtdioden des erfindungsgemäßen Lichtmoduls aus Figur 4 resultierende Lichtverteilung des Markierungslichts;
- Figur 6: eine schematische Darstellung der Ausleuchtung beim Betrieb aller Leuchtdioden eines möglichen Lichtmoduls eines Scheinwerfers zum Rechtsanbau;
- Figur 7: die Ausleuchtung aus Figur 6, ergänzt durch eine Ausleuchtung beim Betrieb aller Leuchtdioden eines möglichen Lichtmoduls eines Scheinwerfers zum Linksanbau;
- Figur 8: eine schematische Darstellung der Ausleuchtung beim Betrieb sämtlicher Leuchtdioden der Lichtmodule von Scheinwerfern beider Anbauseiten bei teilweiser Überlappung der Verteilungen in der Fahrbahnmitte; und

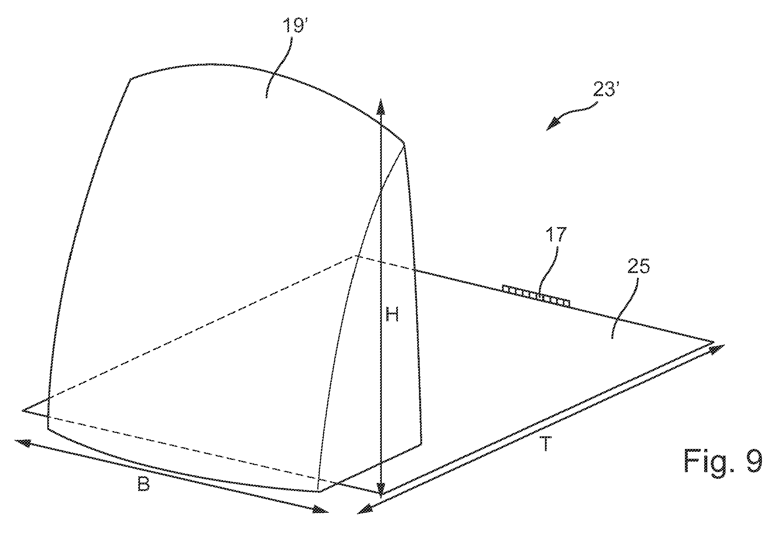

- Figur 9: einen prinzipiellen Aufbau einer besonders kompakten Ausführungsform des erfindungsgemäßen Lichtmoduls.

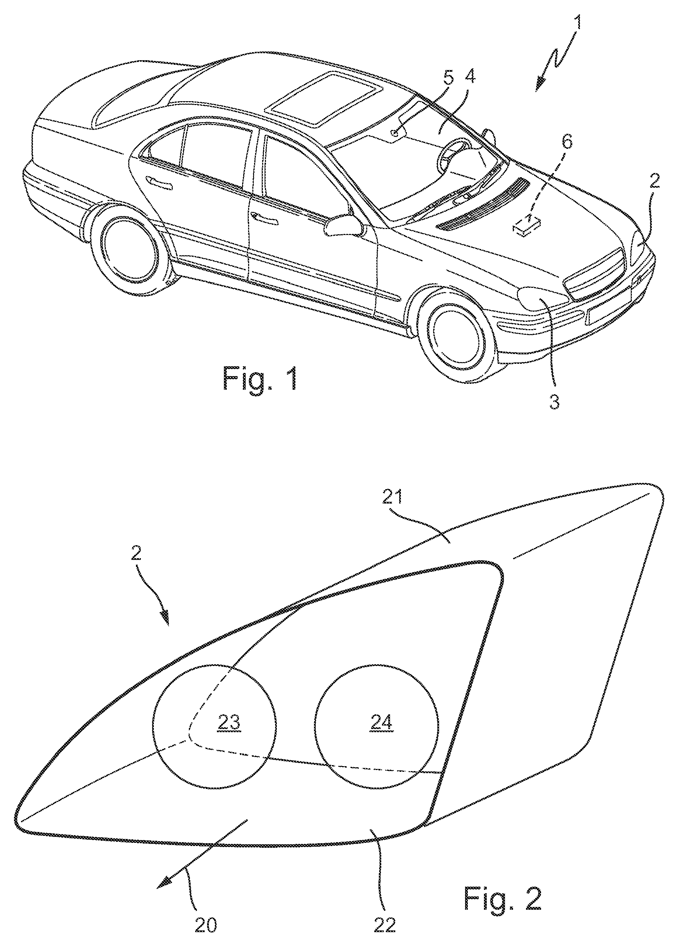

In Figur 1 ist ein Kraftfahrzeug in seiner Gesamtheit mit dem Bezugszeichen 1 bezeichnet. Das beispielhaft dargestellte Fahrzeug 1 ist für Rechtsverkehr ausgelegt. Selbstverständlich ist die vorliegende Erfindung nicht auf Rechtsverkehr beschränkt, sondern kann auch in entsprechender Weise für Linksverkehr eingesetzt werden. Im Frontbereich des Fahrzeugs sind zwei Scheinwerfer 2, 3 angeordnet. Der Scheinwerfer 2 ist für den Linksanbau und der Scheinwerfer 3 für den Rechtsanbau am Fahrzeug 1 ausgelegt. Die beiden Scheinwerfer 2, 3 bilden eine sogenannte Scheinwerferanordnung. Jeder der Scheinwerfer 2, 3 umfasst mindestens ein Lichtmodul, das ausschließlich zur Erzeugung eines Markierungslichts ausgebildet ist. Mit Hilfe des Markierungslichts, das später noch im Detail erläutert wird, können räumlich beschränkte Bereiche vor dem Kraftfahrzeug 1 gezielt ausgeleuchtet werden. Besonders bevorzugt ist es, wenn das Markierungslicht diejenigen Bereiche vor dem Fahrzeug 1 ausleuchtet, wo potentiell gefährdete beziehungsweise gefährdende Objekte detektiert wurden.

Hinter einer Windschutzscheibe 4 des Fahrzeugs 1 ist ein in Fahrtrichtung gerichteter Sensor 5 in Form einer Kamera angeordnet. Der Sensor 5 erfasst einen Bereich vor dem Fahrzeug 1 und generiert ein entsprechendes Abbild. Der Sensor 5 kann mit sichtbarem Licht oder mit unsichtbarer Strahlung, bspw. Infrarot-Strahlung arbeiten. Das Abbild wird von einem im Fahrzeug 1 angeordneten Rechner 6 verarbeitet, um vor dem Fahrzeug 1 oder am Fahrbahnrand befindliche Objekte, zum Beispiel Gegenstände, Personen oder Tiere, zu detektieren. In Abhängigkeit von der Position eines detektierten Objekts wird dann mindestens ein Lichtmodul mindestens eines Scheinwerfers 2, 3 derart angesteuert, dass das Markierungslicht das detektierte Objekt gezielt anstrahlt. Das Anstrahlen des Objekts kann dabei kurzzeitig einmalig, intermittierend, für eine längere Zeitdauer, maximal bis das Fahrzeug an dem Objekt vorbeigefahren ist, oder auf sonstige Weise erfolgen. Es ist auch denkbar, dass das Objekt mit variierender Helligkeit angestrahlt wird. So wäre es beispielsweise denkbar, das detektierte Objekt zunächst mit geringer Helligkeit anzustrahlen, um - beispielsweise falls es sich bei dem Objekt um eine Person oder ein Tier handelt - ein Blenden oder Erschrecken zu vermeiden und dann die Helligkeit allmählich zu steigern. Ebenfalls denkbar wäre es, das Objekt mit einem Markierungslicht anzustrahlen, das eine andere Lichtfarbe aufweist als die übrige Lichtverteilung vor dem Fahrzeug 1 (zum Beispiel Abblendlicht). Nach Möglichkeit sollte die Lichtfarbe des Markierungslichts den gesetzlichen Regelungen genügen.

Schließlich wäre es auch denkbar, dass das Markierungslicht das detektierte Objekt mit für das menschliche Auge unsichtbarer Strahlung, bspw. Infrarot-Strahlung, anstrahlt. Dadurch könnte das Objekt räumlich und zeitlich beschränkt mit einer erhöhten Strahlungsintensität bestrahlt werden, um die Abbildung des Objekts, bspw. im Rahmen eines Night-Vision-Systems (Nachtsichtgerät für Kraftfahrzeuge), zu verbessern und - falls eine automatische Erkennung des Objekts vorgesehen ist - eine zuverlässiges Erkennen des Objekts zu gewährleisten.

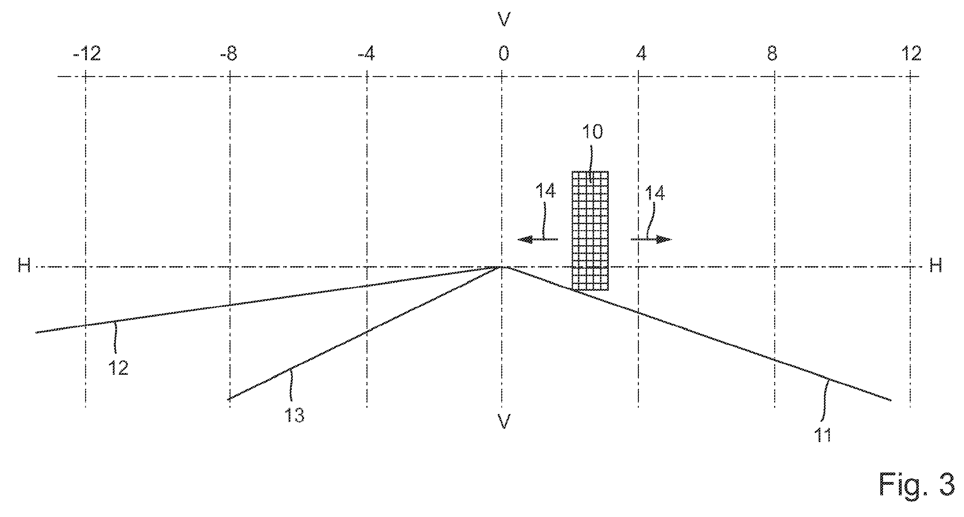

Die von dem mindestens einen erfindungsgemäßen Lichtmodul des mindestens einen Scheinwerfers 2, 3 erzeugte mögliche Lichtverteilung in Form des Markierungslichts ist in Figur 3 beispielhaft dargestellt. Figur 3 zeigt die Lichtverteilung auf einer vor dem Fahrzeug 1 in einem Abstand zu einem der Scheinwerfer 2, 3 angeordneten Messschirm. Auf dem Messschirm sind eine Vertikale VV und eine Horizontale HH eingezeichnet. Die von dem erfindungsgemäßen Lichtmodul erzeugte Lichtverteilung ist mit dem Bezugszeichen 10 bezeichnet. Eine Fahrbahn, auf der das Fahrzeug 1 fährt, umfasst einen Fahrbahnrand 11 auf der eigenen Verkehrsseite sowie einen Fahrbahnrand 12 auf der Gegenverkehrsseite (hier für Rechtsverkehr, bei Linksverkehr entsprechend umgekehrt). Zwischen der Fahrbahn auf der eigenen Verkehrsseite sowie der Fahrbahn auf der Gegenverkehrsseite ist eine Markierungslinie 13 eingezeichnet. Das Markierungslicht 10 kann bspw. durch elektrisches Umschalten von LEDs 18 eines LED-Arrays 17 in Richtung von Pfeilen 14 horizontal bewegt werden, um verschiedene Bereiche vor dem Fahrzeug 1 gezielt anstrahlen zu können. Wichtig für die Position des Markierungslichts 10 ist dabei einerseits, dass ein detektiertes Objekt angestrahlt wird und so die Aufmerksamkeit des Fahrers des Fahrzeugs 1 auf das Objekt gelenkt wird. Andererseits muss aber darauf geachtet werden, dass das Markierungslicht 10 nicht in solche Bereiche strahlt, in denen sich andere Verkehrsteilnehmer, insbesondere vorausfahrende und entgegenkommende Verkehrsteilnehmer, befinden. Das in Figur 3 gezeigte Ausführungsbeispiel betrifft - wie gesagt - ein Fahrzeug 1 für Rechtsverkehr. Bei einem Fahrzeug für Linksverkehr wäre das Markierungslicht 10 dementsprechend um die Vertikale VV gespiegelt angeordnet.

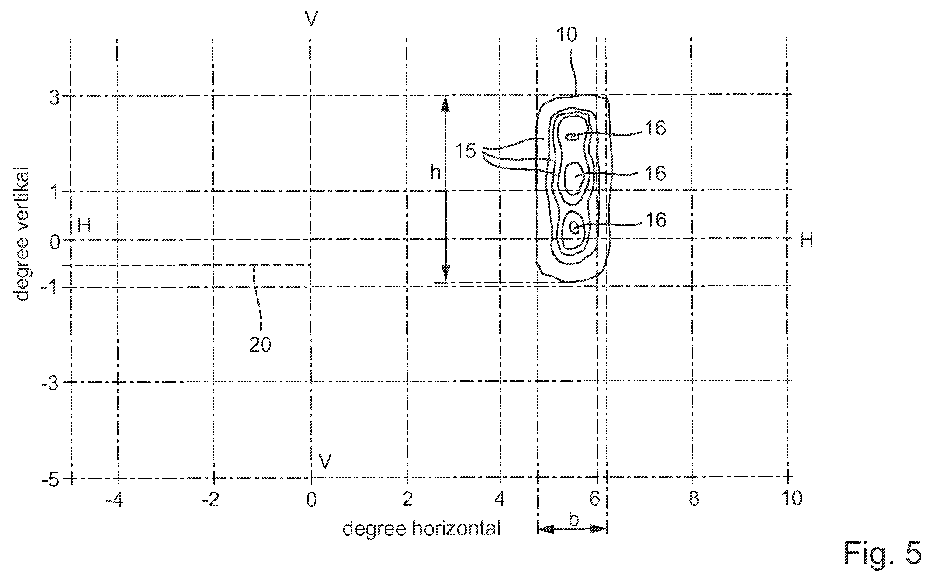

Figur 5 zeigt ebenfalls die resultierende Lichtverteilung 10 des mit dem erfindungsgemäßen Lichtmodul erzeugten Markierungslichts. Die in der Lichtverteilung 10 eingezeichneten Linien 15 sind sogenannte Isoluxlinien, die Bereiche gleicher Beleuchtungsstärke bezeichnen. Bereiche 16 der Lichtverteilung 10 mit der größten Beleuchtungsstärke liegen im Zentrum der Lichtverteilung 10. Nach außen hin nimmt die Beleuchtungsstärke dann, wie die Isoluxlinien 15 verdeutlichen, ab.

Der Bereich 10 des Markierungslichts ist seitlich zumindest bereichsweise durch annähernd vertikal verlaufende Helldunkelgrenzen begrenzt. In dem dargestellten Ausführungsbeispiel verlaufen die seitlichen Helldunkelgrenzen im wesentlichen senkrecht zur Horizontalen HH und sind nach oben beziehungsweise nach unten hin abgerundet, so dass der Bereich 10 nach oben und unten hin in etwa die Form eines abgeflachten Halbkreises aufweist. Selbstverständlich kann die Form des Bereichs 10 in der Praxis von der dargestellten Form abweichen. Wichtig ist jedoch, dass der Bereich 10 sowohl in horizontaler als auch in vertikaler Richtung eine Erstreckung von lediglich einigen Grad aufweist. Die Breite b der Lichtverteilung 10 wird dabei von einem Punkt, wo der Gradient der Helligkeitsverteilung einen bestimmten Wert überschreitet, vorzugsweise ein Maximum aufweist, auf der linken Seite des Bereichs 10 zu einem entsprechenden Punkt auf der rechten Seite des Bereichs 10 gemessen. Die genannten Punkte befinden sich üblicherweise am linken Dunkel-Hell-Übergang beziehungsweise am rechten Hell-Dunkel-Übergang des Bereichs 10. Das Markierungslicht 10 hat eine horizontale Erstreckung von weniger als 2° sowie eine vertikale Erstreckung von weniger als 5°. In dem dargestellten Ausführungsbeispiel hat der Bereich 10 eine Breite b von etwa 1° bis 2° und eine Höhe h von etwa 3° bis 4°. Ein Großteil des Markierungslichts 10 liegt oberhalb der Horizontalen HH und damit auch oberhalb einer horizontalen Helldunkelgrenze einer abgeblendeten Lichtverteilung (zum Beispiel Abblendlicht oder Nebellicht). Eine solche Helldunkelgrenze ist in Figur 5 durch eine gestrichelte Linie links der Vertikalen VV angedeutet und mit dem Bezugszeichen 20 bezeichnet.

In Figur 2 ist ein Beispiel für einen auf der Gegenverkehrsseite angeordneten Scheinwerfer 2 der Scheinwerferanordnung des Fahrzeugs 1 dargestellt. Der andere Scheinwerfer 3 ist in entsprechender Weise ausgestaltet. Der Scheinwerfer 2 ist für Linksanbau ausgelegt und umfasst ein in Lichtaustrittsrichtung 20 mit einer Lichtaustrittsöffnung versehenes Gehäuse 21. Die Öffnung des Gehäuses 21 ist durch eine transparente Abdeckscheibe 22 verschlossen. Die Abdeckscheibe 22 kann bereichsweise mit oder ohne optisch wirksame Elemente (zum Beispiel Prismen) ausgebildet sein. Sie besteht aus farblosem Kunststoff oder Glas. Im Inneren des Gehäuses 21 ist mindestens ein Lichtmodul 23, 24 angeordnet. In dem dargestellten Ausführungsbeispiel sind zwei Lichtmodule 23, 24 vorgesehen. Dabei kann das eine Lichtmodul 24 zur Erzeugung einer Abblendlichtverteilung und/oder einer beliebig anderen Lichtverteilung (z.B. Fernlicht, Stadtlicht, Autobahnlicht oder einer anderen Art von adaptiver Lichtverteilung) ausgebildet sein. Bei dem anderen Lichtmodul 23 kann es sich um ein erfindungsgemäßes Lichtmodul handeln, das ausschließlich zur Erzeugung des Markierungslichts 10 dient. Die entsprechende von dem Lichtmodul 23 erzeugte Lichtverteilung ist in den Figuren 3 und 5 dargestellt und wurde bereits oben näher erläutert.

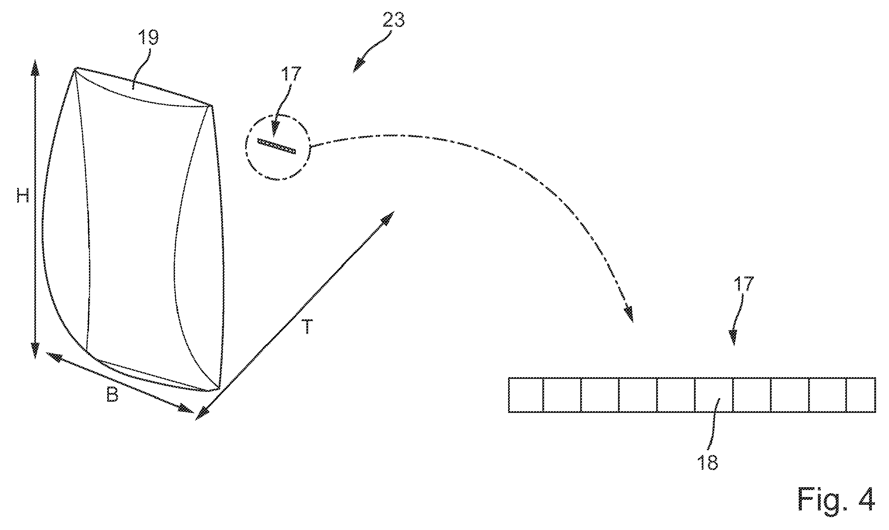

Mit dem Markierungslicht 10 können gezielt, ohne dass dabei mechanische Blenden oder ähnliches zum Einsatz kommen, Objekte auf oder neben der Fahrbahn vor dem Fahrzeug 1 angestrahlt werden. Zur Detektion der Objekte dienen beispielsweise die Kamera 5, der Fahrzeugrechner 6 und andere, hier nicht explizit erwähnte Vorrichtungen. Das erfindungsgemäße Lichtmodul 23 ist im Detail in Figur 4 dargestellt. Es umfasst ein im weitesten Sinne linear angeordnetes LED-Array 17 mit mehreren nebeneinander angeordneten Leuchtdioden (LEDs) 18. In dem dargestellten Ausführungsbeispiel umfasst das LED-Array 17 zehn LEDs 18. Eine LED 18 umfasst eine oder mehrere Halbleiterlichtquelle. Die LEDs 18 können von einem Steuergerät (nicht dargestellt) des Scheinwerfers 2 einzeln angesteuert werden.

Die LEDs 18 senden im einfachsten Fall für den Fahrer des Fahrzeugs 1 sichtbares Licht aus, durch das der Fahrer auf eine besondere Gefahrensituation aufmerksam gemacht werden kann. Ferner kann der Warneffekt auch durch ein Blinken der Lichtinformation oder durch ein Einfärben der Lichtverteilung 10 verstärkt werden. Darüber hinaus ist es denkbar, dass das Markierungslicht 10 auch in einem für den Fahrer unsichtbaren Bereich arbeitet und dadurch die Ausleuchtung zum Beispiel in einem infraroten Spektralbereich in bestimmten Bereichen der Lichtverteilung gezielt verstärkt. Dies kann sinnvoll sein, um für eine automatische, rechnergestützte Auswertung des mittels einer Infrarotkamera (beispielsweise Kamera 5) aufgenommenen Fahrbahnbereichs vor dem Fahrzeug 1 bestimmte Gefahrenbereiche vor dem Fahrzeug mit einer höheren Strahlungsintensität auszuleuchten. Eine ernst zu nehmende Gefahr für die angestrahlten Objekte besteht dadurch nicht, da es sich um eine räumlich sowie zeitlich beschränkte Ausleuchtung des Gefahrenbereichs handelt. Die höhere Strahlungsintensität muss nicht permanent und auch nicht in der gesamten Lichtverteilung zur Verfügung gestellt werden.

Bei dem erfindungsgemäßen Lichtmodul 23 kann der zur Markierung der verschiedenen Bereiche vor dem Fahrzeug 1, insbesondere der verschiedenen Orte am Fahrbahnrand 11, dienende Strahlkegel 10 auf rein elektronischer Weise, das heißt ohne bewegte mechanische Teile, bewegt werden, indem jeweils unterschiedliche LED-Chips 18 des LED-Arrays 17 angesteuert werden, das heißt ein- beziehungsweise ausgeschaltet oder gedimmt werden. Hierdurch ist es möglich, bei sich bewegendem Fahrzeug 1 und/oder sich bewegendem detektierten Objekt das Objekt ohne das Bewegen von mechanischen Bauelementen des Lichtmoduls 23 mit dem Strahlkegel 10 automatisch zu verfolgen. Durch eine Variation der Anzahl der eingeschalteten LEDs 18 kann die Breite des Lichtkegels 10 verändert werden.

Zudem ist eine Kopplung des Markierungslichts 10 mit einem Kraftfahrzeug-Nachtsichtgerät möglich, das die Fahrsituation vor dem Fahrzeug mittels IR- oder UV-Kameras erfasst und eine rechnergestützte Auswertung der Fahrsituation vornimmt und potentiell gefährdende oder gefährdete Objekte vor dem Fahrzeug 1 erkennt, und die Aufmerksamkeit des Fahrers des Fahrzeugs 1 durch den Lichtkegel 10 gezielt auf das Objekt zu lenken.

Das Lichtmodul 23 für Markierungslicht 10 umfasst eine Lichtquelle (LED-Array 17) mit mehreren LEDs 18, die einzeln angesteuert, das heißt geschaltet oder gedimmt werden können. Diese LEDs 18 sind vorzugsweise horizontal in einer vertikalen, zu einer optischen Achse des Moduls 23 senkrechten Ebene angeordnet. Eine gekrümmte und/oder nicht ebene Anordnung der einzelnen LEDs 18 ist ebenfalls denkbar und kann vorteilhaft sein, um Abbildungseigenschaften des optischen Systems, insbesondere einer Abbildungsoptik 19 des Lichtmoduls 23, optimal auszunutzen. In dem Ausführungsbeispiel aus Figur 4 werden die einzelnen LEDs 18 direkt und unmittelbar durch die Abbildungsoptik 19 in Form einer Projektionslinse abgebildet. Wahlweise kann zur Formung der Lichtverteilung weitere optische Elemente in unmittelbarer Nähe zu der Lichtquelle 17 zum Einsatz kommen (sogenannte Vorsatzoptiken; in Figur 4 nicht dargestellt). Eine Vorsatzoptik ist an sich bspw. aus der EP 1 338 844 A1 oder der EP 1 461 656 A1 bekannt. Die Vorsatzoptik kann ein Reflektor oder eine Transmissionsoptik sein, wobei diese einteilig oder mehrteilig ausgeführt werden können. Ebenfalls denkbar wäre eine Vorsatzoptik, die eine Kombination aus Transmissions- und Reflexionsoptiken umfasst. Vorzugsweise ist jedem der LEDs 18 eine separate Vorsatzoptik zugeordnet. Schließlich ist es auch denkbar, die durch die einzelnen LEDs 18 beziehungsweise die diesen zugeordneten Vorsatzoptiken gebildeten Lichtbündel durch eines oder mehrere Lichtleitelemente zu formen, insbesondere vorzuformen.

Die Projektionslinse 19 bildet die LED-Reihe 17 beziehungsweise das durch die Vorsatzoptiken erzeugte Bild in einer Weise ab, dass jeweils eine LED 18 einen horizontalen Winkelbereich von etwa 1° und einen vertikalen Winkelbereich von etwa 4° abdeckt (vgl. Figur 5) . Das erfindungsgemäße Lichtmodul 23 kann besonders klein, kompakt und leicht ausgebildet werden, da es ausschließlich zur Erzeugung des Markierungslichts dient. Die Abmessungen des Lichtmoduls 23 aus Figur 4 betragen beispielsweise 60 mm in der Höhe H, 30 mm in der Breite B und etwa 60 mm in der Tiefe T.

Wenn die LEDs 18 des LED-Arrays 17 symmetrisch zu einer vertikalen Mittelebene des Lichtmoduls 23 angeordnet sind, würde auf jeder Anbauseite eine Lichtverteilung in einem Winkelbereich von etwa +5° bis -5° entstehen. Um einen größeren Winkelbereich ausleuchten zu können, ist ein asymmetrischer Einbau der Leuchtdioden 18 in dem Lichtmodul 23 denkbar, wobei Scheinwerfer 2, 3 für Linksanbau bzw. Rechtsanbau unterschiedliche asymmetrische Lichtmodule 23 haben. Auf diese Weise kann zum Beispiel im Fall von jeweils zehn LEDs 18 der Rechtsanbauscheinwerfer 3 einen Winkelbereich von 0° bis 10°R und der Scheinwerfer 2 für Linksanbau den linken Fahrbahnrand 12 in einem Winkelbereich von 0° bis -10°L überstreichen. Es wäre auch denkbar, dass lediglich in einem der Scheinwerfer 2, 3 ein Lichtmodul 23 vorgesehen ist, das um eine im wesentlichen vertikale Drehachse mechanisch verschwenkbar in dem Scheinwerfergehäuse gelagert ist.

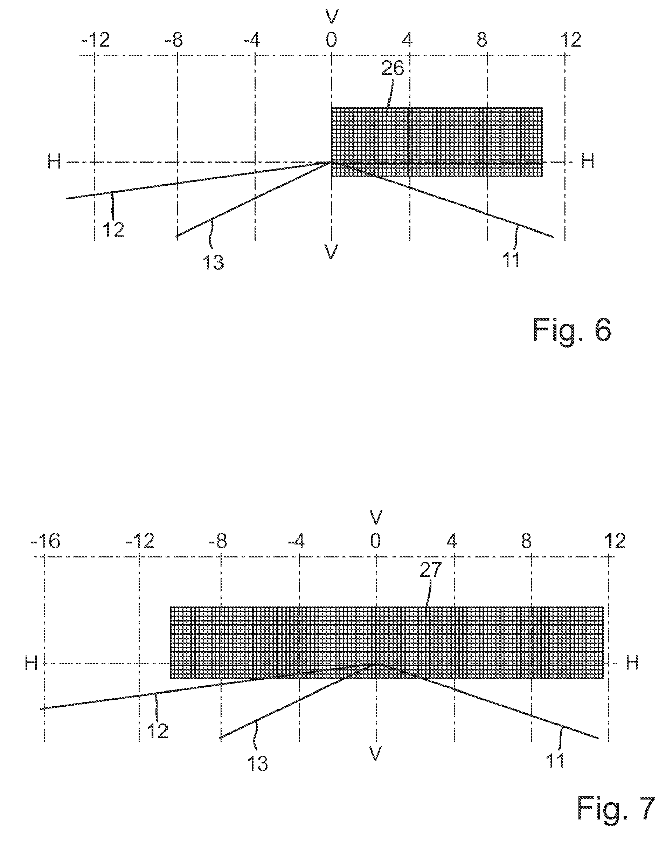

Für den Fall des Betriebs des gesamten LED-Arrays 17 der Scheinwerfer 2, 3 beider Anbauseiten kann in diesem Fall das Markierungslicht 10 auch als Zusatzfernlicht mit einer dann resultierenden horizontalen Breite von etwa 20° genutzt werden. In diesem Fall ist das Lichtmodul 23 bzw. die von diesem ausgesandte Lichtverteilung zum Abblendlicht ausgerichtet. Figur 6 zeigt eine schematische Darstellung der Ausleuchtung 26 beim Betrieb des gesamten LED-Arrays 17 des Scheinwerfers 3 für Rechtsanbau. In Figur 7 ist eine schematische Darstellung der Ausleuchtung 27 beim Betrieb sämtlicher LED-Arrays 17 der Scheinwerfer 2, 3 beider Anbauseiten dargestellt.

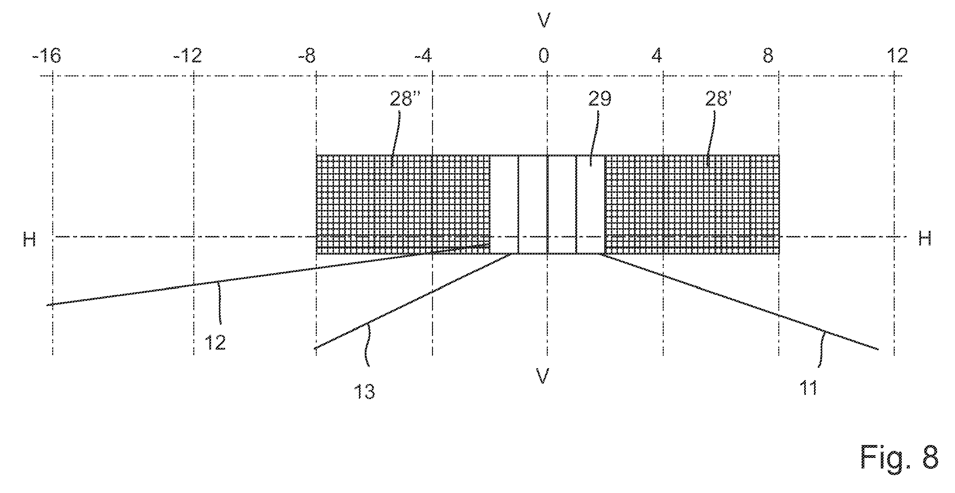

Des Weiteren ist eine asymmetrische Anordnung der Leuchtdioden 18 in den Lichtmodulen 23 mit einer teilweisen Überlappung der Lichtkegel der Scheinwerfer 2, 3 der beiden Anbauseiten möglich, um in dem Zusatzfernlichtmodus eine Ausleuchtung 28 in Richtung der Überlappungsbereichs 29 zu verstärken. Eine entsprechende Lichtverteilung ist schematisch in Figur 8 gezeigt. Dabei überlappen sich die von dem LED-Array 17 des Scheinwerfers 3 zum Rechtsanbau ausgesandte Lichtverteilung 28' und die Zusatzfernlichtverteilung 28" des LED-Arrays 17 des Scheinwerfers 2 für Linksanbau in einem Bereich 29 von horizontal etwa -2° bis +2°. Die Überlappung 29 hat in diesem Beispiel also eine Breite von etwa 4°.

Ein besonders kompaktes Lichtmodul 23' kann dadurch realisiert werden, dass eine Spiegelfläche 25 vorgesehen ist, die sich in etwa entlang einer horizontalen Mittelebene des Lichtmoduls 23' erstreckt, welche die optische Achse des Moduls 23' umfasst. Durch die zusätzliche Spiegelblende 25 kann die Höhe H der Abbildungsoptik 19 in etwa halbiert werden. Die Breite B und die Tiefe T des Lichtmoduls 23' bleiben im wesentlichen unverändert gegenüber der Ausführungsform aus Figur 4.

Des Weiteren ist der Einsatz von unterschiedlichen LEDs 18 verschiedener Licht- bzw. Strahlungsausbeute auf einem LED-Board, das heißt in einem Lichtmodul 23, 23' denkbar. Hierdurch kann eine zusätzliche kostensparende Variation der Lichtverteilung erreicht werden. Eine Bestückung des LED-Boards mit verschiedenen LEDs 18 unterschiedlicher Farben ist zur Steigerung des Warneffekts und damit der Aufmerksamkeit des Fahrers im Rahmen des im ECE-Farbraum zulässigen Bereiches denkbar. Somit könnten verschiedene Farben im Bereich von bläulich weiß bis gelblich weiß eingesetzt werden. Ebenso ist es denkbar, dass IR-LEDs und LEDs, die sichtbares Licht aussenden, auf einem LED-Board gemischt eingesetzt werden.

## Patentansprüche

1. Lichtmodul (23) für einen Kraftfahrzeugscheinwerfer (2, 3), zur Erzeugung einer Lichtverteilung, das Lichtmodul (23) umfassend:
- mehrere separat ansteuerbare Leuchtdioden (18) zum Aussenden von elektromagnetischer Strahlung, und
- mindestens eine Abbildungsoptik (19), vorzugsweise in Form einer Linse, zur Abbildung der von den Leuchtdioden (18) ausgesandten Strahlung auf einer Fahrbahn vor dem Fahrzeug (1),
**dadurch gekennzeichnet, dass** das Lichtmodul (23) zur Erzeugung eines Markierungslichts (10) ausgebildet ist, das zur gezielten und räumlich beschränkten zusätzlichen Ausleuchtung eines vor dem Fahrzeug (1) detektierten Objekts dient und auf einem in einem Abstand vor dem Scheinwerfer (2, 3) angeordneten Messschirm einen ausgeleuchteten Markierungsbereich umfasst, der in horizontaler und vertikaler Richtung eine Erstreckung von jeweils lediglich einigen Winkelgrad aufweist.

2. Lichtmodul (23) nach Anspruch 1, **dadurch gekennzeichnet, dass** das Markierungslicht (10) durch geeignete Ansteuerung der Leuchtdioden (18) auf das vor dem Fahrzeug (1) detektierte Objekt gerichtet ist.

3. Lichtmodul (23) nach Anspruch 1 oder 2, **dadurch gekennzeichnet, dass** jeder der Leuchtdioden (18) eine Optik zur Bündelung der von der Leuchtdiode (18) ausgesandten Strahlung zugeordnet ist, wobei die Abbildungsoptik (19) die von den Bündelungsoptiken gebündelte Strahlung auf der Fahrbahn vor dem Fahrzeug (1) abbildet.

4. Lichtmodul (23) nach einem der Ansprüche 1 bis 3, **dadurch gekennzeichnet, dass** die Leuchtdioden (18) in einer im wesentlichen horizontalen Mittelebene des Lichtmoduls (23) nebeneinander angeordnet sind.

5. Lichtmodul (23) nach einem der Ansprüche 1 bis 4, **dadurch gekennzeichnet, dass** das Lichtmodul eine Spiegelfläche (25) aufweist, die sich auf einer im wesentlichen horizontalen Mittelebene des Lichtmoduls (23) erstreckt.

6. Lichtmodul (23) nach Anspruch 4 oder 5, **dadurch gekennzeichnet, dass** ein Mittelpunkt der horizontal nebeneinander angeordneten Leuchtdioden (18) in einem Abstand zu einer im wesentlichen vertikalen Mittelebene des Lichtmoduls (23) angeordnet ist.

7. Lichtmodul (23) nach einem der Ansprüche 1 bis 6, **dadurch gekennzeichnet, dass** die Leuchtdioden (18) in Richtung einer im wesentlichen vertikalen Mittelebene derart in einer von der Ebene abweichenden Anordnung angeordnet sind, dass unter Berücksichtigung von Abbildungseigenschaften der mindestens einen Abbildungsoptik (19) und - sofern vorhanden - der Bündelungsoptiken der gewünschte Markierungsbereich gezielt ausgeleuchtet wird.

8. Lichtmodul (23) nach einem der Ansprüche 1 bis 7, **dadurch gekennzeichnet, dass** das Lichtmodul (23) derart ausgebildet ist, dass die von einer der Leuchtdioden (18) ausgesandte Strahlung einen Markierungsbereich mit einem horizontalen Winkelbereich von etwa 1° und einem vertikalen Winkelbereich von etwa 4° abdeckt.

9. Lichtmodul (23) nach einem der Ansprüche 1 bis 8, **dadurch gekennzeichnet, dass** zumindest eine der Leuchtdioden (18) für das menschliche Auge sichtbares Licht aussendet.

10. Lichtmodul (23) nach Anspruch 9, **dadurch gekennzeichnet, dass** zumindest zwei der Leuchtdioden (18) unterschiedlich farbiges Licht aussenden, vorzugsweise in einem Farbbereich von bläulich weiß bis grünlich weiß.

11. Lichtmodul (23) nach einem der Ansprüche 1 bis 8, **dadurch gekennzeichnet, dass** zumindest eine der Leuchtdioden (18) für das menschliche Auge unsichtbare Strahlung, vorzugsweise Infrarotstrahlung, aussendet.

12. Scheinwerfer (2, 3) für ein Kraftfahrzeug, der Scheinwerfer umfassend mindestens ein erstes Lichtmodul zur Erzeugung einer Lichtverteilung mit einer im wesentlichen horizontalen Helldunkelgrenze, **dadurch gekennzeichnet, dass** der Scheinwerfer (2, 3) ein weiteres Lichtmodul (23) zur Erzeugung eines Markierungslichts (10) zur gezielten und räumlich beschränkten zusätzlichen Ausleuchtung eines vor dem Fahrzeug (1) detektierten Objekts nach einem der Ansprüche 1 bis 11 aufweist.

13. Scheinwerfer (2, 3) nach Anspruch 12, **dadurch gekennzeichnet, dass** das weitere Lichtmodul (23) derart ausgebildet und in dem Scheinwerfer (2, 3) angeordnet ist, dass das von dem weiteren Lichtmodul (23) erzeugte Markierungslicht (10) oberhalb der Helldunkelgrenze der von dem ersten Lichtmodul erzeugten abgeblendeten Lichtverteilung angeordnet ist.

14. Scheinwerferanordnung für ein Kraftfahrzeug, die Scheinwerferanordnung umfassend einen ersten Scheinwerfer für einen Rechtseinbau an dem Kraftfahrzeug und einen zweiten Scheinwerfer für einen Linkseinbau, wobei jeder der Scheinwerfer ein Lichtmodul zur Erzeugung einer Lichtverteilung aufweist, **dadurch gekennzeichnet, dass** die Lichtmodule der Scheinwerfer nach Anspruch 6 ausgebildet sind, wobei der Mittelpunkt der horizontal nebeneinander angeordneten Leuchtdioden des Lichtmoduls des einen Scheinwerfers auf einer anderen Seite der im wesentlichen vertikalen Mittelebene des Lichtmoduls angeordnet ist als der Mittelpunkt der horizontal nebeneinander angeordneten Leuchtdioden des Lichtmoduls des anderen Scheinwerfers.

15. Scheinwerferanordnung nach Anspruch 14, **dadurch gekennzeichnet, dass** sämtliche horizontal nebeneinander angeordneten Leuchtdioden des Lichtmoduls des einen Scheinwerfers auf einer anderen Seite der im wesentlichen vertikalen Mittelebene des Lichtmoduls angeordnet sind als sämtliche horizontal nebeneinander angeordneten Leuchtdioden des Lichtmoduls des anderen Scheinwerfers.
